# EUROPEAN PATENT APPLICATION

(11) **EP 2 164 142 A1**
(43) Date of publication of application: **17.03.2010**
(21) Application number: 08253031.2
(22) Date of filing: 15.09.2008
(51) Int. Cl.: H02G 3/12

(54) **Service distribution box**

(71) Applicant: C & C Marshall Limited, Sidney Little Road Churchfields Industrial Estate St Leonards-on-Sea, East Sussex TN38 9PU (GB)
(72) Inventor: Carter, Paul John, St. Leonards on Sea, East Sussex, TN38 8BY (GB)
(74) Representative: Lamb, Martin John Carstairs

(57) **Abstract**

The invention provides a service distribution box, such as an electrical accessory box which can be fixed in position in a hole in a cavity wall or dry lining without the installer having to access clamping arms which are located within the body of the box. The box (10) comprises at least one clamp (12, 13) being mounted in the body adjacent to the aperture (22) for rotational movement about an axis normal to the end of the body (11) between a first position in which a clamping arm (19) of the clamp (12, 13) is within the body (11) and a second position in which the clamping arm (19) projects outwardly from the body (11) through the aperture (22), and for slidable movement in a direction parallel to the axis. The box also has guard means (22,39,40) configured to guard movement of the clamp (12,13) to allow the clamping arm to move substantially unrestricted between the first position and a position external to the body (11) such that objects, for example wires or screws, are inhibited from restricting movement of the clamp within the box (11). In use, the box can be mounted in a hole in a cavity wall and the clamping arm (19) can be made to engage the rear face of a sheet (28) of material constituting part of the cavity wall while the flange (16) engages the front face of the sheet (28).

## Description

The present invention relates to a service distribution box, such as an electrical accessory box of the type for insertion into a hole, or aperture in a sheet of material constituting part of a cavity wall. This kind of accessory box is commonly called a dry lining box.

A widely used type of electrical accessory box is described in GB2117573. This provides an electrical accessory box comprising a hollow body that is opened at one end, which has four side walls, and flanges extending outwardly from the side walls adjacent to the one end of the body. A pair of substantially oppositely disposed apertures are provided in two side walls and two clamps are provided, each mounted in the body adjacent to a respective aperture for swivelable movement about an axis normal to the one end of the body between a first position in which a clamping arm of the clamp is within the body and a second position in which the clamping arm projects outwardly from the body through a respective aperture. The flanges are also capable of slidable movement in a direction parallel to the axis. In use, the box can be mounted in a hole in the cavity wall and the clamping arm can be made to engage the rear face of a sheet of material constituting part of the cavity wall whilst the flanges engage the front face of the sheet.

It is particularly preferred that the clamps should have locking means for locating the clamping arms in their respective second position. In use, an installer will first of all form a hole in the sheet material of the cavity wall, the hole being of a size just large enough to accept the hollow body. The box is then placed in the hole, with the clamping arms in their first position within the body so that they do not block insertion of the box into the hole. Once in position, an installer can manually push the clamping arms outward into the second position. Subsequently, electrical accessories can be placed in the box and connected to cabling within the cavity through specially provided holes in the side of the box. While electrical connections are made, the box is loosely held in position by the flanges and the clamping arms, which are held in their second positions by the locking means. Finally, when the installer comes to attach a face plate, screws extending through the face plate engage screw holes in pivots of the flanges. Rotation of the screws draws the flanges towards the face plate, so that the clamping arms are gripped tightly against the rear face of the sheet of material constituting the cavity wall. This arrangement is highly successful and relatively easy to use.

However, there is a desire to simplify operation further.

Another known electrical accessory box, which may be supplied with a face plate attached thereto, is known from EP 1895631. The electrical accessory box disclosed therein can be fixed in position in a hole in a cavity wall or dry lining without the installer having to access clamping arms which are located within the body of the box. The box comprises a hollow body having at least one side wall, at least one flange extending outwardly from the side wall at the end of the body and at least one aperture in the side wall, at least one clamp being mounted in the body adjacent to the aperture for rotational movement about an axis normal to the end of the body between a first position in which a clamping arm of the clamp is within the body and a second position in which the clamping arm projects outwardly from the body through the aperture. The clamp is slidably movable in a direction parallel to the axis.

Locking means are provided for resisting rotational movement between the second position and the first position. In use, the box can be mounted in a hole in a cavity wall and the clamping arm can be made to engage the rear face of a sheet of material constituting part of the cavity wall while the flange engages the front face of the sheet. The clamp comprises a drive part for engaging a screw threaded member, the coefficient of friction between the drive part and the screw threaded member being such that rotation of the screw threaded member can drive the drive part rotationally against the resistance of the locking means into the second position.

It has been found that objects such as screws, wires or other such objects that are not visible when operating the clamping arm may obstruct the clamping arms as they are moved from their first positions to their second positions, thus making it difficult, or impossible, for the clamp to function. The present inventor has realised that the box must be configured such that the clamp can move freely, and is not inhibited from passing from a first position to a second position. In order to achieve this a degree of protection is required to ensure that the clamp can move out of the box substantially unobstructed.

In general, the present invention resides in a service distribution box, such as an electrical accessory box in which guard means are configured to guard, shroud or protect, movement of a clamp such that objects, for example wires or screws, are inhibited from restricting movement of the clamp within the box as a clamping arm is moved between a first position and a position external to the body, thus allowing the clamp to move out of the box substantially unobstructed.

Accordingly, the present invention provides a service distribution box, such as an electrical accessory box, for insertion into a hole, such as a surface-aperture on a dry-lined wall, and for accepting a terminal face-plate, wherein the depth of insertion is determined by a flange mounted thereon, the box having: a clamp, movable between a position in which a clamping arm of the clamp is arranged in a body of the box such that the clamp does not inhibit the installation of the box into a hole and a position in which the clamping arm projects outwardly from the body through an aperture, wherein in use the box can be securably held within the hole using the flange and the clamp; and guard means configured to protect movement of the clamp to allow the clamping arm to move substantially unrestrictedly between the position within the body and the position in which the clamping arm projects outwardly from the body such that objects, for example wires or screws, are inhibited from restricting movement of the clamp within the box.

In the position in which the clamping arm is arranged such that it does not inhibit the installation of the box, the clamping arm of the clamp is preferably arranged substantially within a body of the box.

The service distribution box may be suitable for electrical services but may also be suitable for data distribution or any such service where a distribution box, or accessory box, is required.

The clamping arm may be configured to extend, radially, from an axis of rotation of the clamp. The clamp comprises a body which is rotatably mounted and said body may have a flange, or similar protrusion extending from the body, such as a shield, to aid manual rotation of the clamp. Preferably, the shield may cover the respective aperture when the clamping arm is in its second position.

The guard means may inhibit the clamp from moving upwards towards the flange, until the clamp is moved to a position external to the body. The guard means may at least partially enclose the clamp.

The invention provides an advantage wherein the clamp may move out of the box substantially unobstructed because the clamping arm is protected from, or, in other words, is guarded from moving uncontrollably upwards within the box during storage, assembly or operation. The clamp also inhibits, or prevents, objects in the box from blocking movement of the clamp. This is particularly advantageous when the box is provided to a customer with a face plate already fitted and the customer is unable to observe whether an obstruction to the clamp is present. The invention is also advantageous when no face plate is fitted because manual operation of the clamp can be performed single-handedly without interference from other objects that may block the clamp.

The guard means may comprise first and second parts, the first part being connected to the floor of the box and the second part extending from the first part, and may extend in a plane parallel to the floor of the box. The guard means may comprise a guard part, and said guard part may be substantially hook-shaped in cross-section, with one end of the hook connected to the floor of the box and the other end arranged to be engagable with the clamping arm.

The guard part may take any form, provided the clamping arm is guarded from moving uncontrollably upwards within the box, thus inhibiting, or preventing the clamp from contacting other objects in the box. The guard means may take the form of a shroud.

The guard means may be integrally formed with the box or it may be fixed to the box. By way of example, the guard means may be mechanically connected to the box using an adhesive or by welding.

Alternatively, or additionally, the guard means may comprise the aperture and the aperture may have a guard slot. The guard slot may be configured to restrict vertical movement of the clamping arm until the clamping arm is in a position external to the box and, thereafter, inhibit rotational movement of the clamping arm as the clamping arm is moved vertically when the clamping arm is projected outwardly from the body, between the first and second positions.

The clamp may be enclosed in its position inside the box by the sidewall of the box, with the clamp being arranged such that the clamp cannot be substantially raised from the floor level of the box until the clamping arm has been extended to a position outside the box. Thus, in the first position, the clamping arm has a leading edge, substantially positioned just beneath the wall of the box in the aperture. At the other end of the clamping arm, stop means, in the form of an abutment, may prevent the clamping arm from being moved into the box such that it may be raised vertically therein.

The box may include locking means that are provided to resist rotational movement of the clamping arm between the second position and position wherein the clamping arm is internal to the body. The locking means may be provided on the guard-slot.

The relationship between a connecting portion of the clamp and the aperture may provide a locking means when the clamping arm is displaced outside the box. The clamping arm may be attached to the clamp via a bridging, or connecting portion, said connecting portion enabling the clamping arm to be projected at a predetermined distance from the main body of the clamp. The length of the connecting portion determines the amount by which the clamping arm extends from the body of the box.

The connecting portion may be configured to cooperatively engage with the aperture to provide locking means and/or guard means.

In other words, a complimentary match between the connecting portion and the aperture in which it resides prevents the clamping arm from rotating into the box. This provides an advantage whereby the clamp cannot be rotated into the box at a level where an obstruction may occur.

By providing guard means, the movement of the clamping arm within the box may be restricted to a level close to, or adjacent, the floor of the box.

The box may have a hollow body which is open at one end and which has at least one side wall, the at least one flange extending outwardly from the side wall at or adjacent to the one end of the body, the at least one aperture located in the side wall, and the at least one clamp mounted substantially within the body adjacent to the aperture, for rotational movement about an axis normal or substantially normal to the one end of the body, between a first position in which a clamping arm of the clamp is substantially within the body and a second position in which the clamping arm projects outwardly from the body through the aperture and for slideable movement in a direction parallel to said axis, wherein in use, the box can be mounted in a hole in a cavity wall and the clamping arm can be made to engage the rear face of a sheet of material constituting part of the cavity wall whilst the flange engages the front face of the sheet, the clamp comprising a drive part for engaging a screw threaded member.

The box can be installed without the user having to touch the clamp to rotate the clamp from the first position to the second position. The box can be implemented with a small number of parts and with a small amount of redesign over the existing box. The box is simple and convenient to install.

The box may have at least two flanges, each extending from a respective side wall, and at least a flange extends outwardly from each side wall. There may be at least two clamps, each mounted in the body adjacent to a respective aperture.

The clamp may comprise a drive-part for receiving a screw-threaded member and the coefficient of friction between the drive part and the screw threaded member may be such that rotation of the screw threaded member can drive the drive part rotationally to rotate the clamp against the resistance of the locking means from the first position to the second position.

The locking means may comprise a deflection bar on the hollow body and a deflector cam on the clamping arm, the arrangement being such that as the arm moves from its first to its second position, the cam first deflects the deflection bar and then releases the deflection bar so that the latter moves behind the cam.

The deflection bar is suitably integral with the body and is defined between a respective aperture and a slot in the body.

The screw threaded member and the drive part may engage one another in a screw thread contact zone and, separately, in a friction zone, a friction member being provided on one of the drive part or screw threaded member for frictionally engaging the other. The frictional member may comprise a projection integrally moulded with the drive part.

The electrical accessory box may include an electrical accessory.

The box may be suitably made of thermoplastic material, for example UPVC. The box may be manufactured using injection moulding.

Preferably each clamp includes a pivot mounted for rotational and axial movement in a bearing integral with or secured to the body.

There are a number of ways by which the coefficient of friction between the screw threaded members and the drive part can be controlled, as further described in EP 1895631.

For example, the drive part and the screw threaded member may have a surface finish which provide the desired level of friction. This can be obtained for example by making the surfaces with a matt finish or with surface projections, for example ridges, of appropriate size to provide the desired level of friction. The drive part and the screw threaded member may be formed of thermoplastic material or metal. The contacting surfaces may be roughened to provide the desired level of friction.

Preferably, the screw threaded member comprises a screw. Screws are very widely available and are accordingly cheap and very familiar in use.

However, such screws typically have relatively smooth surfaces.

The desired coefficient of friction can be obtained by taking a standard screw and then roughening at least part of the surface thereof.

In GB2117573, the screw engages a screw threaded insert, suitably made of metal. This arrangement does not provide the desired level of friction. In practice, the friction is too low, so that the rotation of the screw cannot cause the clamping arm to rotate past the locking means.

The drive part may comprise a moulded bore. The diameter of the bore may be set so that it forms a relatively tight engagement with the screw, so that a high level of friction can be obtained.

In an alternative arrangement, the screw threaded member and the drive part engage one another in a screw thread contact zone and, separately, in a friction zone. In the friction zone, a friction member is provided on one of the drive part or screw threaded member for frictionally engaging the other.

This arrangement has a number of advantages.

The drive zone can be formed in a conventional manner. Conventional structures can be used, for example, a screw threaded insert engaging the screw threaded part of a screw. This can simplify manufacture and design.

Secondly, in the friction zone, the friction member can be designed and formed relatively simply. The desired level of friction can be obtained and controlled by forming the friction member so that it presses on the other of the screw threaded member and drive part with sufficient force to generate the required level of friction. It is found that, given the tolerances that are normally experienced in production methods, such as moulding, it is a relatively straightforward matter to successfully dimension a friction member to give the correct level of friction.

It is particularly preferred that the friction member is provided on the drive part. Preferably, it extends from the drive part into the path of the screw threaded member. Preferably, the friction member is mounted adjacent to the screw thread contact zone. Preferably, it comprises an integrally moulded upstand formed on an inner bore of the drive part for engaging a screw.

It is of course necessary that the drive part and the screw threaded member should be capable of sliding with respect to one another if sufficient force is applied to overcome the friction therebetween. This will allow the screw threaded member to rotate with respect to the drive part if sufficient force is applied so that the drive part is moved axially along the screw threaded member.

Preferably each clamping arm has an outer edge of generally arcuate shape centred on the axis of the respective clamp.

Preferably, the electrical accessory box comprises an electrical accessory, fixed in position in the box.

Connector cables, having connections at their ends, may extend from the electrical accessory box, for example through holes in the electrical accessory box.

The electrical accessory box may comprise a face plate, covering the interior of the hollow body. Preferably, the screw threaded member extends through the face plate. Preferably, the screw threaded member comprises a screw. The head of the screw is preferably accessible from outside the electrical accessory box so that it can be rotated for example by a screw driver. The screw threaded member is preferably configured to fix the face plate to the body.

Preferably, at least one screw is provided in a screw hole in the face plate.

In this way, the electrical accessory box can be provided as a substantially complete unit with an electrical accessory contained in the box, the box being closed at its front face by the face plate and with electrical connector cables having first connectors extending from the rear or side of the accessory box, service cables having corresponding connectors being located within the cavity wall.

The invention also resides in a method of installing a service distribution box, said method comprising the actions of: preparing a hole for locating the box therein; connecting the box to a service; locating the box in the hole; and actuating the clamp such that the box can be securably held within the hole.

Alternatively, the hole may have been previously prepared and, therefore, the method requires one fewer action. The service to which the box connects may require a manual connection to be made or may be made as a result of the box mating with a corresponding service interface that has been pre-installed in the hole. Actuation of the clamp may be done directly, using an operator's hand or may be actuated by other means, such as a fixing screw.

In use, the installer first of all connects each respective service cable to the respective electrical connector cable, with the electrical accessory box placed near to the hole in the sheet of the cavity wall, but not closing it. When the connection is formed, the accessory box can be placed snugly in the hole. Then the installer rotates the screw threaded member, for example with a screwdriver, so that the clamping arms are first moved from the first position to the second position, due to frictional engagement between the screw threaded member and the clamp. Then, as the installer continues to rotate the screw threaded member with sufficient force to overcome the friction between the screw threaded member and the drive part, the drive part is caused to slide axially along the screw threaded member so that the clamping arm engages the rear face of the cavity wall material.

The present invention will be further described by way of example only with reference to the accompanying drawings, in which:
Figure 1 is a perspective view of an electrical accessory box having an embodiment of the present invention;
Figure 2 is a perspective view of the rear of the box as viewed in Figure 1; and
Figure 3 is a sketch isometric view of a complete electrical accessory box.

Referring now to the drawings, the electrical accessory box shown therein provides a housing for electrical accessories such as switches and sockets and is suitable for use in cavity walls which comprise a pair of relatively thin sheets of material held in spaced relationship or with dry lining applied to existing walls. The electrical accessory box indicated by the general reference number 10 has a body 11 formed of plastics material and two clamps 12 and 13 essentially formed of plastics material. The body 11 is open at one end, has a square base wall 14, side walls 15 and flanges 16 extending outwardly from the side walls at the open end of the box to define a continuous rim.

Each clamp 12, 13 comprises a pillar 17, a wing-like shield 18 which projects transversely from the pillar and a clamping arm 19 which projects from one face of the shield 18 and which has an outer edge 20 of generally arcuate shape centred on the longitudinal axis of the pillar.

The pillars 17 of the clamps 12 and 13 are mounted in bearings formed from sleeves 21 secured to or integral with the body 11. The sleeves 21 are positioned midway between the ends of two opposite side walls 15 of the body 11 and apertures 22 are provided in these two side walls adjacent to the clamps. The other two side walls are provided with knock-out portions 23 to provide cable entries.

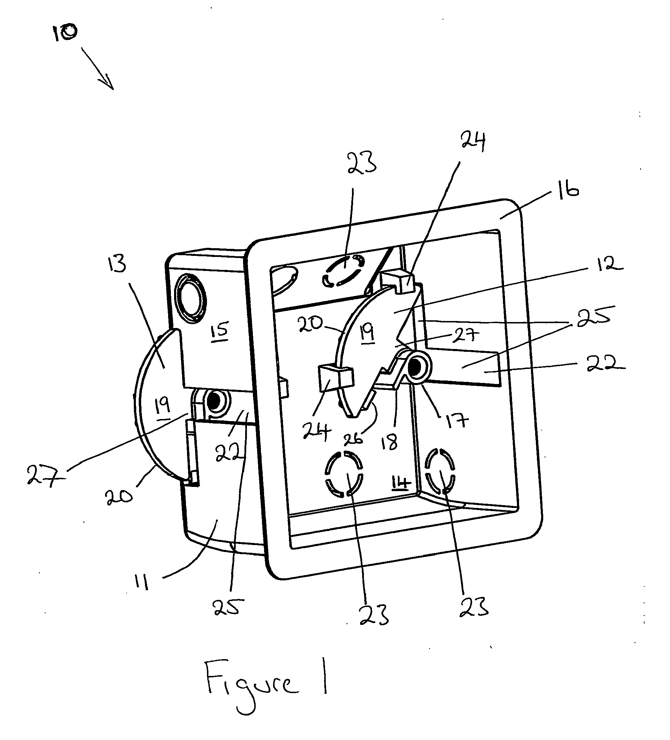

Further, a guard 24 is shown configured on the floor 14 of the box 10 adjacent to the clamping arm 19. The guard 24 is substantially hook-shaped in cross-section, with a base of the guard connected to the floor 14 and the distal end of the guard extending from the base and substantially perpendicularly therefrom and over the peripheral edge of the clamping arm 19 in order to shroud, or partially cover, said edge. A single guard 24 may be provided or, as shown in Figure 1, two guards, located at either end of the clamping arm 19, when in a position within the body, may be provided. Any number of guards 24 may be used.

In an alternative form, a single guard enclosing and engaging with the entire arcuate peripheral edge of the clamping arm 19 may be provided. Any form of guard may be used and may be configured to extend substantially across the entire surface of the clamping arm 19, such that it is substantially enclosed and protected. Alternatively, a cage-like structure could be used.

The guards 24 are configured to prevent an object, such as a wire or a screw, interfering or obstructing the clamping arm 19 as it moves, and to substantially restrict a vertical movement of the clamping arm. The movement of the clamping arm is restricted by a predetermined amount in a vertical direction, perpendicularly with respect to the floor, to prevent other objects in the box from interfering with the clamping arm.

Ideally, the guards 24 will be made of the same material as the box 10 and formed in the same manufacturing process in order to reduce costs and improve the efficiency of manufacture. However, in light of the hooked shape, which may lead to slides being required in the tooling during formation of the box during injection moulding fabrication, the guards may be formed of another material, preferably a non-conductive material, and fixed to the floor 14 of the box 10 at a separate stage in the manufacturing process of the box 10.

The guards 24 may take any such form that prevents objects inhibiting movement of clamping arm from the first position to the second position. In Figure 1, the guards 24 are configured such that the clamping arm 19 may only rotate about the axis of the pillar 17, thus substantially restricting the vertical movement of the clamping arm within the box.

The guard means may also comprise a guard-slot 25, said guard-slot 25 also functioning as the aperture 22 by allowing the clamping arm to be moved from the first position, to an intermediate position wherein the clamping arm is outside of the box, before the clamping arm 19 is movable substantially vertically, with respect to the axis of the pillar 17, towards the second position.

The guard-slot 25 as shown in Figure 1, is substantially L-shaped although other aperture shapes may be used. The guard-slot is configured to enable the clamping arm 19 to pass from the first position, within the box, to the second position without being obstructed by objects such as wires or screws that, perhaps, occupy a space above the clamping arm between the clamping arm and a face plate. For clarity, the clamping arm rests substantially in the box in a position such that the box can be inserted freely into an aperture. However, an edge of the clamping arm may be positioned within the aperture such that it may be prevented from moving upwards, as viewed, while still being described as within the box.

In order to achieve this, a leading edge of the clamping arm 19 is engaged within a portion of the L-shaped guard-slot 25 aperture to protect the clamping arm from vertical movement within the box. To compliment this arrangement, a stop 26 is provided to prevent the clamping arm 19 from being disposed entirely within the box 10, said stop ensuring that the clamping arm cannot be moved into the box and raised from the first position within the box.

In use, the height by which the clamping arm 19 can be raised vertically is restricted until it is rotated fully outwards from the box 10. Thereafter, a connecting portion 27 that connects the clamping arm 19 to the pillar 17, is aligned with a leg of the guard-slot 25, which is arranged to extend from the floor 14 towards the flange. Thereafter, the clamping arm can be moved into the second position in which the box is clampable in place.

It should be noted that the guard means may comprise either the guard part 24 and/or the guard-slot 25.

The guard means 24, 25 are particularly advantageous because without a face plate, a person installing the box 10 would be able to single-handedly manually operate the clamp 12, 13 to move the clamp from a position internal to the box to a position external to the box without having to be concerned about interference from objects within the box.

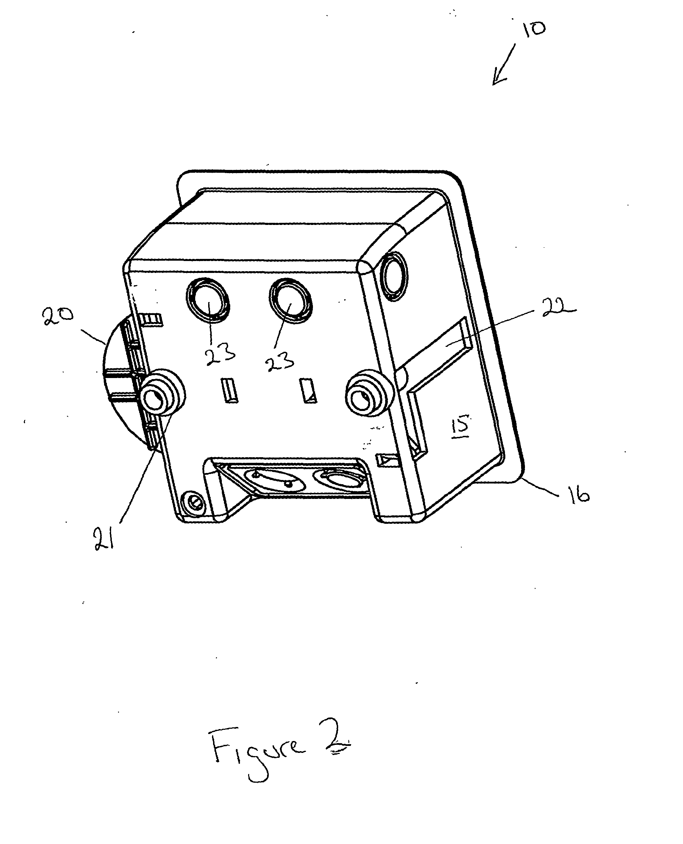

Figure 2 shows a perspective view of the rear of the single-gang box of Figure 1. Reference numerals used in Figure 1 are also applied to like features in Figure 2.

A more detailed description, and accompanying drawings, of the clamp can be found in EP 1895631.

The pillar 17 of each clamp is hollow and has a threaded brass insert at its end adjacent to the open end of the body 11. At its other end, the pillar 17 is provided with four longitudinally extending slits which define four fingers having barb-like formations at their free ends. This allows for insertion and retention of the pillar in the respective sleeve 21. Each pillar 17 is mounted in its respective sleeve 21 for rotational movement and axial sliding movement.

Each pillar 17 is an interference fit in its respective sleeve 21 so that there is a frictional resistance to movement of the pillar relative to the sleeve. By swivelling each pillar 17 about its axis, the clamping arm 19 can be moved from a position in which it is disposed within the body 11 (see Fig. 1) to a position in which it projects outwardly from the body 11 through a respective aperture 22 and in which the respective shield 18 engages the side wall 14 and covers the aperture 22.

In order to lock the clamping arm in the position in which it projects outwardly through the aperture 22 and its associated shield 18 engages the side wall 14, the clamping arm 19 is provided with locking means comprising a pip cam (not shown) on its outer edge and adjacent to but spaced from the shield 18 and the body 11 is provided with a deflection bar (not shown) defined between the aperture 22 and an elongate slot (not shown). As the clamp 12, 13 is swivelled and the clamping arm 19 approaches its outermost position, the pip cam first deflects the deflection bar away from the aperture 22 and then releases the deflection bar so that the latter moves behind the cam to provide a degree of resistance to swivellable movement of the clamp in the opposite angular direction. The deflection bar engages the pip cam and/or the outer edge 20 of the clamping arm when the clamping arm is in its outermost position so that the overall frictional resistance to slidable movement of the clamp relative to the body is sufficient to enable the clamps to hold the box in position in a cavity wall before it is fixed.

The clamp 12 comprises a thermoplastic moulded part that includes, at the top, a brass insert, fixed in place by moulding. The brass insert provides a screw-thread contact zone. In use, it will engage a screw (not shown). A screw threaded surface of the insert will engage the screw threaded surface of the screw, relatively smoothly, allowing a relatively free movement of the screw with respect to the insert.

In order to provide a sufficiently high coefficient of friction so that the rotation of the screw can cause the clamping arm to rotate past the deflection bar, a friction zone is provided. The friction zone comprises a friction member. The friction member is an integrally moulded projection, which projects into the bore so that, when a screw is inserted, it will make frictional contact with the end of the projection. The projection can be dimensioned so that the correct level of friction is obtained, in a relatively simple way that can be put into practice by an injection moulding process.

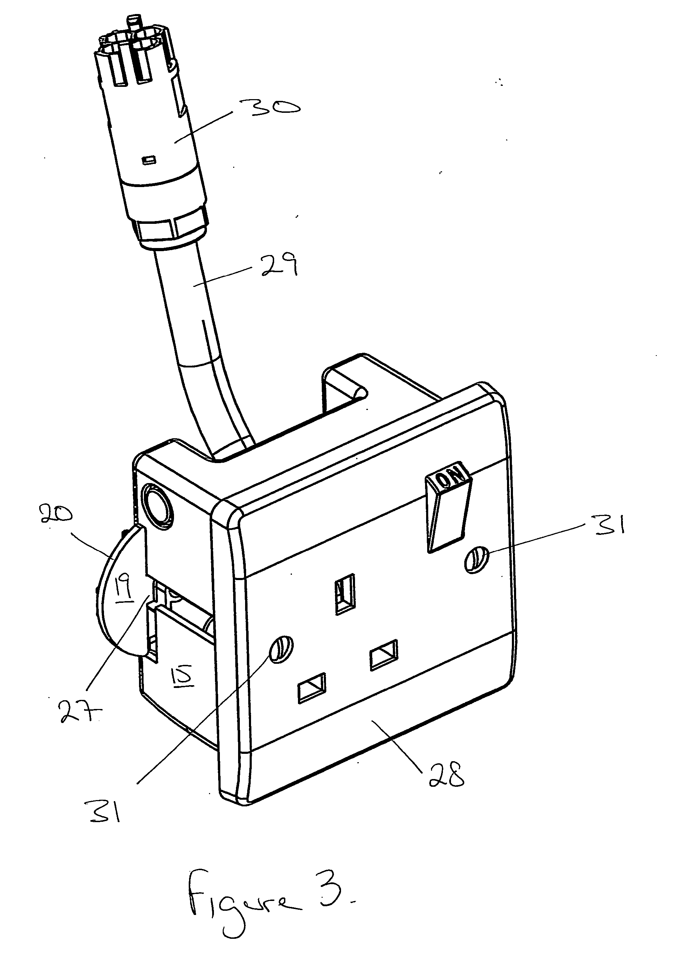

Figure 3 shows a sketch isometric view of an electrical accessory box in an assembled state and is an example of a factory-assembled box 10, which includes a face plate 28. A clamping arm is shown extending from the box. However, the clamping arms would remain substantially within the box prior to insertion into the hole in cavity walling. The accessory is a three-pin socket of which the socket holes and a switch are visible but the internal structure is not visible, being contained inside the box 10. The socket is pre-wired with a connector cable 29 which terminate in a connector 30. The connection cables extend through the hole 23 in the box 10. The face plate 28 is held in position loosely by screws, the heads 31 of which are visible. Each screw engages with a respective clamp 12, 13, being engaged with the respective insert and projection.

When it is desired to provide cavity walling with the box in position, the cavity walling is first of all assembled with a dry lining sheet, with a hole of sufficient size to accommodate the box 10. Cables are laid within the cavity behind the dry lining sheet.

In order to assemble the box in place, the installer first of all connects the connector 30 of the connector cable 29 to a corresponding connector (not shown) of the cables that are laid in the cavity. By doing this, the box 10 is put in complete electrical contact with the circuit of which it is to form a part. It only remains to fix the box 10 in position in the hole. This is done by positioning the body 11 of the box in the hole in the cavity wall. The clamps 12, 13 are in their first position in which they are held within the body 11, such that they do not catch against the sheet of the dry lining. Once in position, the installer simply needs to tighten up each of the screws with a screwdriver.

During a first phase of tightening the screws, the screws will engage the clamps with sufficient friction, due to frictional engagement with the projection, that the clamps are rotated against the resistance of the locking means so that the clamping arms click into position in their second position, with the pip cam riding over the bar. Once the clamp is in the second position, further rotation of the clamps 12, 13 is impossible. If the installer then continues to rotate the screw, with greater force, the screw will start to slip with respect to projection and rotate with respect to the insert.

The clamps are then drawn towards the rear face of the sheet of material constituting part of the cavity wall whilst the flanges 16 engage the front face of the sheet.

In the example described above, the flanges 16 define a continuous rim around the open end of the body 11, but instead flanges may be provided only adjacent to the clamps 12 and 13.

The clamping arm 19 may have reinforcing means such as reinforcing members or ribs, as seen in Figure 2, that function to strengthen the clamping arm. The ribs may also be provided on the face of the clamping arm that contacts the perimeter surface of an aperture to securably fix the box therein.

Further, if the box 10 is provided with a face plate then the movement of the clamping arm 19 is controlled and/or protected such that there is clear unrestricted movement between a position within the body and a position where the clamping arm is external to the box, as can be seen on the left-hand arrangement, as viewed, of the clamping arm in Figure 1.

The shapes and form of the base 14, clamping arm, flanges etc may be of any other convenient shape provided that their functionality, as described above, is maintained.

The present invention has been described above by way of example only and modifications can be made within the invention.

## Claims

**1.** An service distribution box (10) for insertion into a hole and for accepting a terminal face plate, wherein the depth of insertion is determined by a flange (16) mounted thereon, the box having:
a clamp (12,13), movable between a position in which a clamping arm (19) of the clamp (12, 13) is arranged in a body of the box such that the clamp does not inhibit the installation of the box into a hole and a position in which the clamping arm (19) projects outwardly from the body (11) through an aperture (22), wherein in use the box can be securably held within the hole using the flange and the clamp; and
guard means (22,39,40) configured to protect movement of the clamp (12,13) to allow the clamping arm to move substantially unrestrictedly between the position within the body and the position in which the clamping arm projects outwardly from the body (11) such that objects, for example wires or screws, are inhibited from restricting movement of the clamp within the box (11).

**2.** The box of claim 1, wherein the guards means (22,39,40) inhibit the clamp from moving upwards towards the flange, until the clamp (12,13) is moved to a position external to the body (11).

**3.** The box of claim 1 or 2, wherein the guard means at least partially enclose the clamp.

**4.** The box of any preceding claim, wherein the guard means (39) comprises first and second parts, the first part being connected to the floor (14) of the box and the second part extending from the first part.

**5.** The box of any preceding claim, wherein the guard means comprises a guard means (39) in the form of a guard part (39), said guard part being substantially hook-shaped in cross-section, with one end of the hook connected to the floor (14) of the box and the other end arranged to be engagable with the clamping arm (12,13).

**6.** The box of any preceding claim, wherein the guard means comprises the aperture (22) and the aperture has a guard slot (40).

**7.** The box of claim 6, wherein the guard slot (40) is configured to restrict vertical movement of the clamping arm (19) until the clamping arm (19) is in a position external to the box (11) and, thereafter, inhibits rotational movement of the clamping arm (19) as the clamping arm is moved vertically when the clamping arm (19) is projected outwardly from the body, between the first and second positions.

**8.** The box of any preceding claim, wherein locking means (26) are provided for resisting rotational movement of the clamping arm (19) between the second position and a position wherein the clamping arm (19) is internal to the body (11).

**9.** The box of claim 8, wherein the locking means is provided on the guard-slot (40).

**10.** The box (10) of any preceding claim, wherein the box comprises a hollow body (11) which is open at one end and which has at least one side wall (15), the at least one flange (16) extending outwardly from the side wall (15) at or adjacent to the one end of the body, the at least one aperture (22) located in the side wall (15), and the at least one clamp (12, 13,) mounted in the body adjacent to the aperture (22), for rotational movement about an axis normal or substantially normal to the one end of the body (11), between the first position in which a clamping arm (19) of the clamp (12, 13) is within the body (11) and the second position in which the clamping arm (19) projects outwardly from the body (11) through the aperture (22) and for slideable movement in a direction parallel to said axis, wherein in use, the box (10) can be mounted in a hole in a cavity wall and the clamping arm (20) can be made to engage the rear face of a sheet (28) of material constituting part of the cavity wall whilst the flange engages the front face of the sheet (28), the clamp (12,13) comprising a drive part for engaging a screw threaded member (38).

**12.** The box of claim 10, wherein the locking means comprises a deflection bar (26) on the hollow body (11) and a deflector cam (20) on the clamping arm (19), the arrangement being such that as the arm (19) moves from its first to its second position, the cam (20) first deflects the deflection bar (26) and then releases the deflection bar (26) so that the latter moves behind the cam (20).

**13.** A service distribution box according to any preceding claim, including an electrical accessory.

**14.** A service distribution box according to any preceding claim, including a face plate.

**15.** A method of installing a service distribution box (10) according to any preceding claim, said method comprising the actions of: preparing a hole for locating the box therein; connecting the box to a service; locating the box in the hole; and actuating a clamp (12,13) such that the box can be securably held within the hole.
